# EUROPEAN PATENT APPLICATION

(11) **EP 0 547 004 A1**
(43) Date of publication of application: **16.06.1993**
(21) Application number: 92811002.2
(22) Date of filing: 14.12.1992
(51) Int. Cl.: D03D 51/00, G05B 19/04

(54) **Control method for a loom**

(30) Priority: 12.12.1991 JP 329175/91
(71) Applicant: Kabushiki Kaisha Toyoda Jidoshokki Seisakusho, Aichi-ken (JP)
(72) Inventor: Tsuda, Souichi, c/o KABUSHIKI KAISHA, Kariya-shi, Aichi-ken (JP)
(74) Representative: Hammer, Bruno, Dr.

(57) **Abstract**

To simplify the communication system M of the overall control system of a loom.
[STRUCTURE]

The warp letting-off motor (1) is controlled-by the letoff control computer (Cs), the cloth winding motor (15) is. controlled by the winding control computer (Cr). The weft measuring and storage devices (19, 20) are controlled by the weft measurement control computer (Cd), and the solenoid valves (21, 22) for supplying air under pressure to the weft inserting nozzles (17, 18) are controlled by the weft insertion control computer (Cy). The shedding drive 16 is controlled by the shedding control computer (Cp). These control computers (Cs, Cr, Cd, Cy, Cp) are connected to the main control computer (Cm) through serial transmission lines (L). The main control computer (Cm) transmits drive control data to the respective control computers (Cs, Cr, Cd, Cy, Cp) through the serial transmission lines (L) and the communication control devices Fm, Fs, Fr, Fd, Fy, Fp. Each control computer Cs, Cr, Cd, Cy, Cp sets its received drive control data from the main computer Cm as the current effective drive command data for its associated drive or device.

## Description

### DETAILED DESCRIPTION-OF THE INVENTION

### INDUSTRIAL FIELD OF UTILIZATION

The present invention relates to a method of controlling the operation of a weaving loom.

### PRIOR ART

Publication of Japanese unexamined Japanese patent application No. 1-83295 (1989) discloses a distributed control system for a weaving loom, according to which respective drive systems for warp let-off device, cloth winding device, weft insertion device, shedding motion, etc. are provided independently of main loom drive system and controlled by their own auxiliary control computers.

Control data for the respective drive systems are stored in the auxiliary control computers, each of which reads the necessary data in response. to a data selection signal generated by the main control computer.

### PROBLEMS, THAT THE INVENTION IS TO SOLVE

However, such conventional distributed control system has a disadvantage in that it uses complicated parallel lines for communication between the main control computer and the auxiliary control computers. Furthermore, in the control system in which the respective auxiliary control computers previously store therein their own control data, addition of a new auxiliary control computer for any further drive system of the loom may require the data in the other computers to be. changed so as to suit to the addition of the new control computer. It is apparent.. that such- change of the control data is time consuming and troublesome.

Therefore, it is an object of the present invention to provide a method of controlling the operation of a loom which prevents the complication of communication lines of the control system and makes possible flexible construction of the system.

### MEANS SOLVING THE PROBLEMS

In order to achieve the above object, the present invention provides a method of controlling a weaving loom having a main control for controlling main drive system of the loom and auxiliary control systems provided independently of said main control for controlling respective drive systems of individual devices of the loom, wherein the main and auxiliary Controls are connected through serial transmission line, the main control is operable to transfer drive control data to each of the auxiliary, controls through the serial transmission line, and each auxiliary control is operable to set the transferred drive control data as the current effective drive command data.

### OPERATION OF THE INVENTION

The main control is loaded with drive control data for each of the drive systems for the respective devices and transmits the data to the drive systems through the. serial transmission line. This transmission of the drive control data is made when it is necessary to change the manner of operation of any of the drive systems. For example, in a loom equipped with warp letting-off motor and cloth winding motor whose rotational speeds are changed as required for changing the weaving density of fabric to be woven, drive control data for new rotational speeds are transmitted to the auxiliary control systems for the motors. The auxiliary control systems then operates to set the transmitted drive control data as the current effective drive command data until they are substituted with other data.

### EMBODIMENT

The following will describe an embodiment of the present invention as applied to a jet loom, while having reference to FIGS. 1 to 8. The respective Figs. describe the following:
- FIG. 1: is a schematic diagram showing of a weaving loom and a block diagram of control circuit;
- FIG. 2: is a diagram showing a control timing chart;
- FIG. 3: is a flow chart showing a communication control program;
- FIG. 4: is a flow chart showing part of-the communication control program;
- FIG. 5: is a flow chart showing part of the communication control program;
- FIG. 6: is a flow chart showing. part of the communication control program;
- FIG. 7: is a flow chart showing part of the communication control program; and
- FIG. 8: is a flow chart showing part of the communication control program.

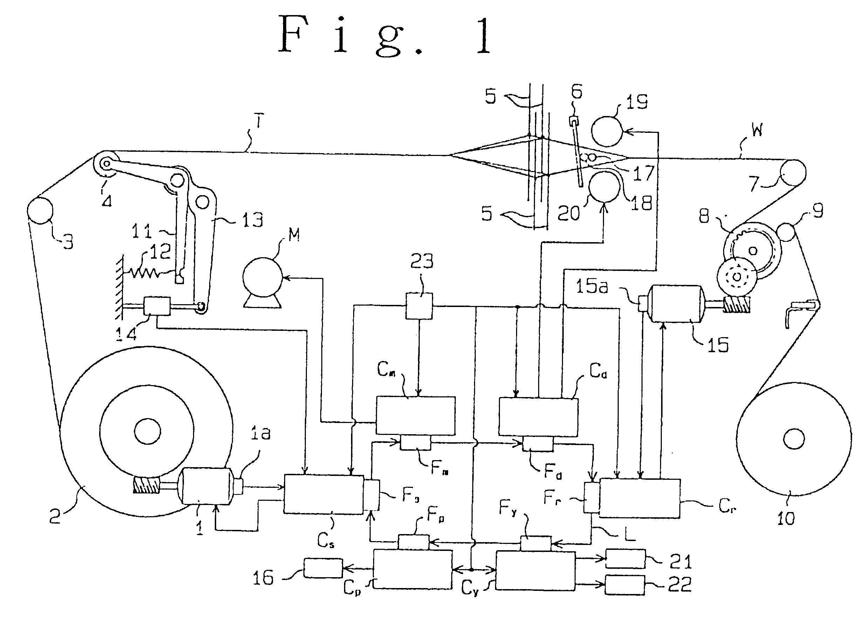

Reference symbol M in FIG. 1 designates a loom drive motor whose operation is controlled by main control computer CM. Reference numeral 1 designates a warp letting-off motor which is provided independently of the loom drive motor M. The letting-off motor 1 drives a warp beam 2 from which warp yarns T are unwound Unwound warp yarns T are guided toward healds 5 and a reed 6 through a back roller 3 and a tension roller 4. Woven fabric W is guided by an expansion bar 7, a surface roller 8 and a press roller 9 to be wound up round a cloth reel 10.

The tension roller 4 is mounted to one end of a tension lever 11 which has at the other end thereof a spring 12 acting to urge the tension roller 4 in contact with the warp yarns T thereby applying tension thereto. The tension lever 11 is rotatably supported by one end of a detecting. lever 13 which has connected to the other end-thereof a load cell 14. In such an arrangement, the warp tension is transmitted to the load cell 14 through the tension roller 4, tension lever 11 and detecting lever 13, which causes the load cell 14 to generate to a warp let-off control computer Cs an electrical signal corresponding to the magnitude of warp tension applied to the tension roller 4.

The let-off control computer Cs is operable to control the rotational speed of the letting-off motor 1 according to the comparison between a warp tension setting and the actual warp tension which is represented by the output electrical signal. from the load cell 14. Thus, the warp tension is adjusted properly by controlling the rotational speed of the motor 1. Additionally, the let-off control computer Cs provides a feed back control for the rotational speed of the letting-off motor 1 on the basis of the detection signals transmitted from a rotary encoder 1a which is incorporated in the motor 1.

The surface roller 8 is operatively connected to a winding motor 15 which is also provided independently of the main motor M. The rotational speed of the motor 15 is feedback-controlled by a winding control computer Cr on the basis of output signals from a rotary encoder 15a incorporated in the winding motor 15.

Shedding operation to move the healds 5 in alternate directions to form an open shed is performed by a dobby-controlled shedding device which is comprised of a shedding drive 16 and a shedding control computer Cp.

Each of weft inserting nozzles 17, 18 'draws a weft from each of Winding type weft measuring and storage devices 19, 20 and inserts the weft into an open shed by air jet issued from the nozzle. There are provided solenoid-operated valves 21, 22 for controlling-the supply of air under pressure to the weft inserting nozzles 17, 18, respectively, and their operation is controlled by a weft insertion control computer Cy. Operation of the weft measuring and storage device 19, 20 is controlled by a weft measurement control computer Cd.

The main control computers Cm. let-off control computer Cs, winding control computer Cr, shedding control computer Cp, weft measurement control computer Cd and weft insertion control computer Cy have a communication control device Fm, Fs, Fr, Fp, Fd, Fy, respectively. These communication control devices Fm, Fs, Fr, Fp, Fd, Fy are serially connected by transmission lines L, as shown in FIG. 1.

Each of the control computers Cm, Cs, Cr, Cp, Cd, Cy is connected to a rotary encoder 23 for detecting the rotational angle of the weaving loom to receive therefrom an, output signal which is representative of the current rotational angle of the loom. The control computers Cm, Cs, Cr, Cd, Cy execute the controlling on the basis of loom rotational angle information provided by the rotary encoder 23, and the main control computer Cm also performs the function of controlling the transmission of control data to the respective auxiliary control computers Cs, Cr, Cp' Cd, Cy through the serial transmission lines L.

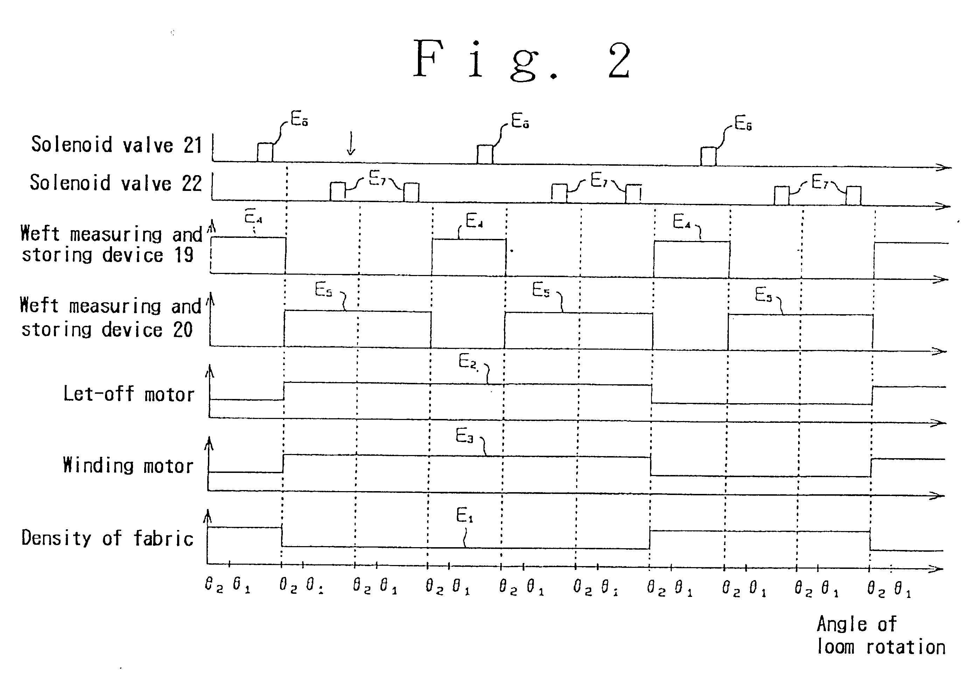

Square waveform E1 in FIG. 2 represents weaving density, or a setting. of fabric pattern to be woven. That is, low density in the waveform E1 corresponds to plain weave and high density to sateen weave.

Waveform E2 shows a setting of warp let-off speed by the letting-off motor 1. High speed S1 is set for the plain weave while low speed S2 is set for the sateen weave. Waveform E3 shows a setting of cloth winding speed by the winding motor 15, wherein the motor is rotated at high speed R1 for the plain weave and at low speed R2 for the sateen weave.

Waveform E4 in FIG. 2 indicates a drive signal for one weft measuring and storage device 19, and waveform E5 a drive signal for the other weft measuring and storage device 20.

Waveform E6 indicates a drive signal to energize the solenoid of the valve 21 and waveform E7 a drive signal to turn on the solenoid of the valve 22.

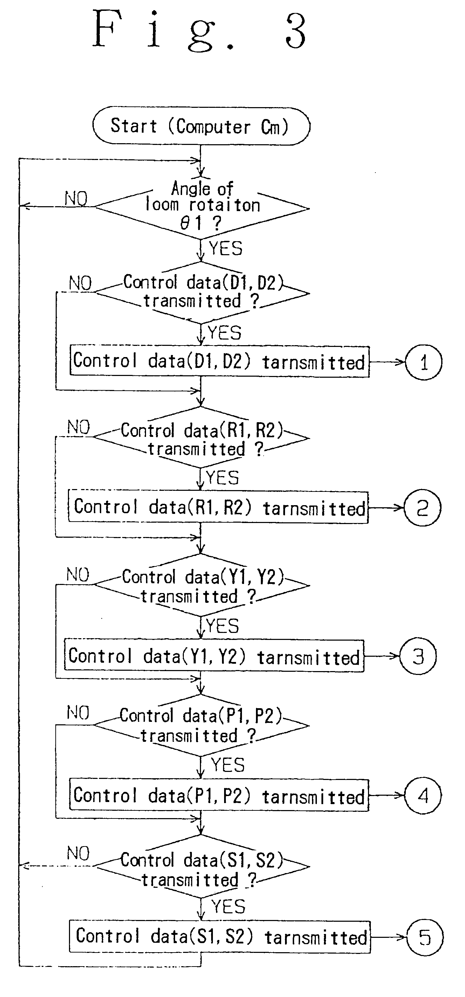

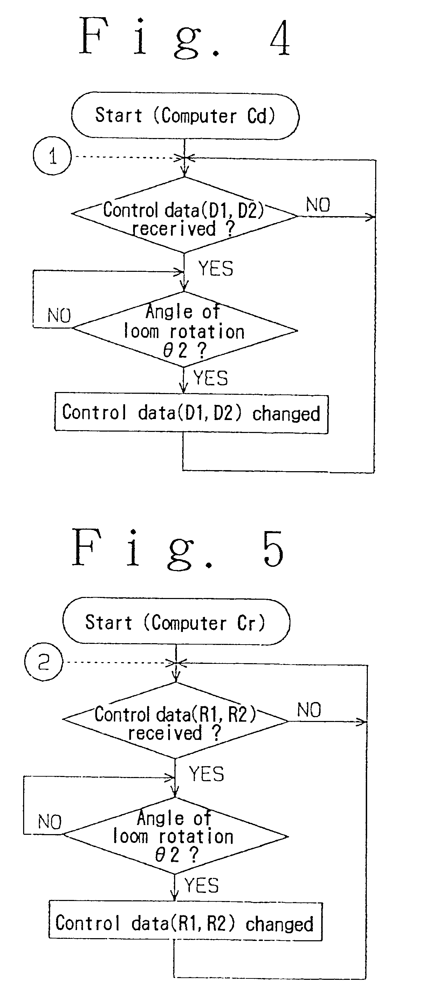

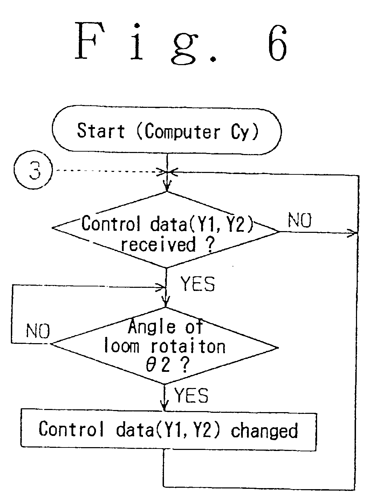

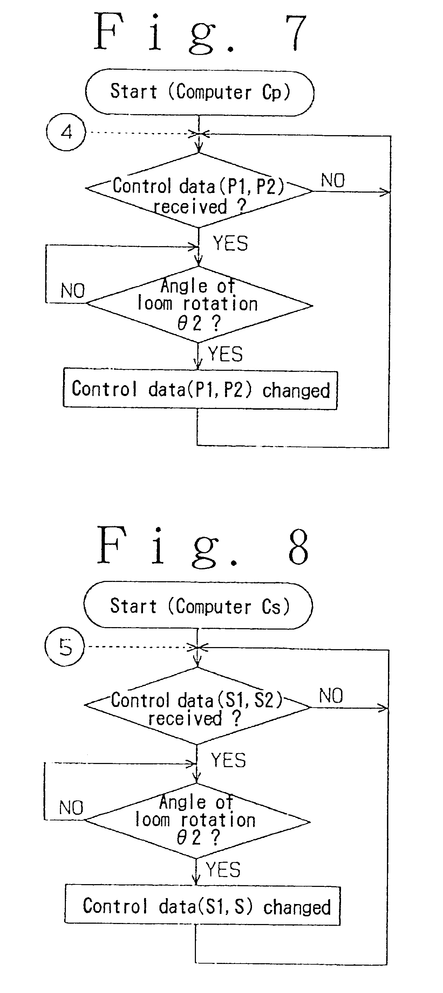

FIGS. 3 to 8 provide flow charts showing programs according to which various control data are transmitted and received between the main control computer Cm and other auxiliary control computers Cs, Cr, Cp, Cd, Cy.

The main control computer Cm contains therein control data for the pattern of fabric weave and for the pattern of weft insertion At each rotational angle 1 of the loom, the main control computer Cm reads the data and, accordingly, determines which drive control data (D1, D2), (R1, R2), (P1, P2), (S1, S2), (Y1, Y2) should be sent to the appropriate auxiliary control computers Cs, Cr, Cp, Cd, Cy.

The drive control data (DI, D2) is command data for driving either of the weft measuring and storage devices 19, 20. The drive control data (R1, R2) provides command data for driving the winding motor 15 at either of the high and low winding speeds R1 and R2, and the drive control data (S1, S2) is command data for driving the warp letting-off motor 1 at either of the high and low warp let-off speeds S1 and S2. The drive control data (P1, P2).. provides command data for driving the shedding drive 16 for either of the plain and sateen weaves, and the drive control data (Y1, Y2) provides command data for energizing either of the solenoids for the valves 21 and 22.

When the weaving is to be changed from high to low density, the main control computer Cm generates the drive control data S1 and R1 to the serial transmission line L through the communication control device Fm. The-drive control data Si is received only by the transmission control device Fs, which provides this data to its warp let-off control computer Cs. As the rotational angle ϑ2 is reached by the loom, the let-off control computer Cs sets this drive control.data S1 as the current effective drive command data for the letting-off motor 1 until it is substituted by the other data S2.

Likewise, the drive control data R1 is received by the communication control device Fr, which then transfers this data to the winding control computer Cr. At the rotational angle 62, the winding control computer Cr sets this drive control data R1 as the current effective drive command Data for the winding motor 15 until it is replaced by the other data S2.

When the weaving is to be changed from low to high density, on the other hand, the main control computer Cm generates the drive control data S2 and R2 to the serial transmission line L through the communication control device Fm. The drive control data S2 is received by the communication control device Fs, which provides this data to its warp 1 et-off control computer CS. As the rotational angle ϑ2 is reached, the let-off control computer Cs sets this drive control data S2 as the current effective drive command data for the letting-off motor 1. Likewise, the drive control data R2 is received by the communication control device Fr, which then transfers this data to the cloth winding control computer Cr. At the rotational angle ϑ2, the winding control computer Cr sets this drive control data R2 as the current effective drive command data for the winding motor 15.

When the main control computer Cm generates the drive control data (D1, D2), (PI, P2), (Y1, Y2), these data are transmitted from the communication control devices Fd, Fp, Fy through the serial lines L to the appropriate control computers Cd, Cp, Cy. At the rotational angle ϑ2, the weft, measurement control computer Cd sets the received drive control data (D1, D2) as the current effective drive command data for the weft measurement; the shedding control computer Cp sets the received drive control data (P1, P2) as the current effective drive command data for the shedding drive, and the weft insertion control computer Cy sets the received drive control data (Y1, Y2) as the current effective drive command data for the weft insertion drive, respectively.

In the above-described method of changing the drive command data in each of the auxiliary control computers Cs, Cr, Cp, Cd, Cy, addition of any new auxiliary control computer for any further drive system of the loom only requires the control data in the main control computer Cm to be changed to suit to the addition of the new auxiliary control computer. Thus, the control system according to the invention does not call for the troublesome and time consuming changing of control data in the auxiliary control computers Cs, Cr, Cp, Cd, Cy and it can be constructed advantageously with greater flexibility than heretofore. Additionally, the use of the serial lines can simplify the, communication system of the overall control system and the addition of a new auxiliary control computer will not complicate the line arrangement for the communication system.

It is so arranged in the above-described embodiment I of the invention that the changing of the drive command data from one to the other in an auxiliary control computer is effected at the rotational angle ϑ2 of the loom, i.e. the angle at which the loom is placed when it is stopped. This means that the necessary change of the drive command data has already been made when the loom is stopped. Therefore, when the weaving operation of the loom is resumed or restarted, each of the drive systems will be controlled according to the setting of the desired fabric density, weave pattern and weft insertion pattern made before the stop of the loom.

To simplify the communication system M of the overall control system of a loom is one of the objectives of present invention. The warp letting-off motor 1 is controlled-by the letoff control computer Cs, the cloth winding. motor 15 is. controlled by the winding control computer Cr. The weft measuring and storage devices 19, 20 are controlled by the weft measurement control computer Cd, and the solenoid valves 21, 22 for supplying air under pressure to the weft inserting nozzles 17, 18 are controlled by the weft insertion control computer Cy. The shedding drive 16 is controlled by the shedding control computer Cp. These control computers Cs, Cr, Cd, Cy, Cp are connected to the main control computer Cm through serial transmission lines L. The main control computer Cm transmits drive control data to the respective control computers Cs, Cr, Cd, Cy, Cp through the serial transmission lines L and the communication control devices Fm, Fs, Fr, Fd, Fy, Fp. Each control computer Cs, Cr, Cd, Cy, Cp sets its received drive control data from the main computer Cm as the current effective drive command data for its associated drive or device.

### EFFECT OF THE INVENTION

As it is apparent from the foregoing, according to the present invention wherein the main and auxiliary controls are connected through serial transmission line, the main control can transfer drive control data to each of the auxiliary control's through the serial transmission line, and each auxiliary control sets the transferred drive control data as the current effective drive command data. Complication of the communication lines of the whole loom control system can be prevented and flexible construction of the system is made possible.

### DESIGNATION OF REFERENCE NUMERALS

1 ... Letting off motor contributing to controlling of fabric density; 15 ... Cloth winding motor contributing to controlling of fabric density; 16 ... Shedding drive; 19, 20 ... Weft measuring and storage device; 21, 22 ... Solenoid valves controlling weft insertion; M ... Main loom drive motor; Cm ... plain control computer; Cs ... Warp let-off control computer; Cr ... Cloth winding control computer; Cp ... Shedding control computer; Cd ... Weft measurement control computer; Cy ... Weft insertion control computer; L ... Serial transmission lines.

## Claims

1. Method of controlling a weaving loom having a main control (Cm) for controlling main drive system of the loom and auxiliary control systems (Cs, Cr, Cd, Cy, Cp) provided independently of said main control (Cm) for controlling respective drive systems of individual devices of the loom, wherein said main (Cm) and auxiliary controls (Cs, Cr, Cd, Cy, Cp) are connected through serial transmission line (L), said main control (Cm) is operable to transfer drive control data to each of said auxiliary controls (Cs, Cr, Cd, Cy, Cp) through. the serial transmission line (L), and said each auxiliary control (Cs, Cr, Cd, Cy, Cp) is operable to set the transferred drive control data as the current effective drive command data.

2. Control system for controlling a weaving loom having a main control (Cm) for controlling main drive system of the loom and auxiliary control systems (Cs, Cr, Cd, Cy, Cp) provided independently of said main control (Cm) for controlling particular drive systems of individual devices of the loom, wherein said main (Cm) and auxiliary controls (Cs, Cr, Cd, Cy, Cp) are connected by transmission line (L), said main control (Cm) operable to transfer drive control data to each of said auxiliary controls (Cs, Cr, Cd, Cy, Cp) through the transmission line (L), and each or selected auxiliary control (Cs, Cr, Cd, Cy, Cp) is operable to set the transferred drive control data as the actual effective drive command and/or control data.

3. Control system as claimed in claim 2, wherein said transmission line (L) for the exchange of data is a serial line, interconnecting the main (Cm) and the auxiliary controls (Cs, Cr, Cd, Cy, Cp).

4. Control system as claimed in claim 2, wherein said transmission lines for the exchange of data are arranged in parallel and are interconnecting the main (Cm) with the auxiliary controls (Cs, Cr, Cd, Cy, Cp).

5. Control system as claimed in any of claims 1 to 4, wherein said auxiliary controls are letoff controls (Cs) for controlling warp let off means (1, 1a, 2), and/or winding controls (Cr) for controlling fabric winding means (15, 15a, 8, 9, 10), and/or weft measuring controls (Cd) for controlling weft masuring means (19, 20), and/or weft insertion controls (Cy) for controlling weft insertion means (17, 18, 21, 22), and/or shedding controls (Cp) for controlling shedding drive means (16).

6. Control system as claimed in any of claims 1 to 5, wherein said controls (Cs, Cr, Cd, Cy, Cp) include computer means.

7. Control system as claimed in any of claims 1 to 6, wherein said controls (Cm, Cs, Cr, Cd, Cy, Cp) further include communication control devices (Fm, Fs, Fr, Fp, Fd, Fy).

8. Loom with a control system according to any of claims 2 to 7.

9. Loom as claimed in claim 8 and controlled according to a method as claimed in claim 1.
